# EUROPÄISCHE PATENTANMELDUNG

(11) **EP 0 660 566 A1**
(43) Veröffentlichungstag der Anmeldung: **28.06.1995**
(21) Anmeldenummer: 94120133.7
(22) Anmeldetag: 19.12.1994
(51) Int. Cl.: H04L 12/26

(54) **Einrichtung zur Anzeige von Telegrammen, die über Leitungen des Europäischen Installationsbusses (EIB) übertragen werden**

(30) Priorität: 22.12.1993 DE 4343812
(71) Anmelder: ABB PATENT GmbH, D-68309 Mannheim (DE)
(72) Erfinder: Hummel, Harry, D-69123 Heidelberg (DE); Riegel, Michael, 69126 Heidelberg (DE)
(74) Vertreter: Rupprecht, Klaus, Dipl.-Ing.

(57) **Zusammenfassung**

Mit der Erfindung wird eine Telegrammanzeigeeinrichtung vorgeschlagen, die im Rahmen von Inbetriebnahme und Servicearbeiten von einem Installations-Bussystem nach dem EIB-Konzept eingesetzt werden kann. Die Einrichtung zeigt mit wenigstens einer Leuchtdiode (5) jede Telegrammübertragung durch ein kurzes Aufleuchten der Leuchtdiode (5) an. Die Einrichtung arbeitet gemäß einer ersten Lösungsvariante mit einer Wechselspannungs-Auskoppeleinrichtung (4), die einen elektronischen Schalter (6) ansteuert. Der Schalter 6 schaltet die Leuchtdiode (5) ein und aus, die aus einem Energiespeicher (3) gespeist wird, der über die Busleitungen (1,2) des Bussystems geladen wird. Eine zweite Lösungsvariante basiert auf einer Verwendung und Ergänzung des EIB-Geräts Busankoppler.

## Beschreibung

Die Erfindung bezieht sich auf eine Einrichtung zur Anzeige von Telegrammen, die über Leitungen des Europäischen Installationsbusses (EIB) übertragen werden.

Der EIB ist ein von der EIBA, European Installation Bus Association konzipiertes 2-Draht-Bussystem zur Steuerung von Beleuchtungseinrichtungen, Jalousien, Heizungen und anderen elektrischen Verbrauchern. Das EIB-System ist beispielsweise beschrieben im ZVEI/ZVEH-Handbuch Gebäudesystemtechnik, herausgegeben von der Wirtschaftsförderungsgesellschaft der Elektrohandwerke mbH, Frankfurt, 1993.

Die Steuerung von Verbrauchern erfolgt beim EIB mittels Telegrammen, die auf den Leitungen des EIB zwischen Busteilnehmern ausgetauscht werden. Telegramme sind Bitfolgen, wobei eine logische Null als Änderung des Gleichspannungspegels der Versorgungsgleichspannung gebildet ist.

Es sind für unterschiedliche Zwecke bereits mehrere Mittel zur Anzeige von Telegrammen, die auf EIB-Busleitungen übertragen werden, bekannt. So ist es beispielsweise möglich, mit Hilfe eines Personal Computers und einer Software, z.B. Busmonitor und Diagnose der Fa. Siemens gesendete Telegramme aufzuzeichnen und mit ihrem vollen Inhalt auf einem Bildschirm anzuzeigen. Auch die EIBA hat eine zur Telegrammanalyse geeignete Software mit der Bezeichnung EIBA TOOL SOFTWARE zur Verfügung gestellt.

Ein solches Telegrammanzeigesystem ist z.B. gut geeignet für die Fehleranalyse, erfordert aber zumindest einen PC, eine serielle Schnittstelle, also ein EIB-Gerät, sowie die notwendige Software.

Eine andere Art von Telegrammanzeigen ist aus Firmendruckschriften von Herstellern von Teilnehmergeräten für den Anschluß an das EIB-System bekannt. Dabei handelt es sich um Informations-Displays, die als optische Anzeige eine Klartextanzeige aufweisen. Solche Textanzeigen können z.B. sein: Jalousie unten, Tür offen, Temperatur 21° usw., wobei die Anzeigen ergänzt sein können durch akustische Signalgeber. Solche Anzeigegeräte sind auf Datenschienen aufsteckbare Geräte, mit denen ein Anwender mit Hilfe eines Tasters eine bestimmte Anzahl, z.B. acht unterschiedliche Zustandsanzeigen anwählen kann.

Die bekannten Einrichtungen sind bedingt durch den erforderlichen Aufwand bzw. aufgrund begrenzter Anzeigemöglichkeiten wenig geeignet für eine Anwendung während der Inbetriebnahme von Anlagen. Einem Installateur oder Inbetriebnehmer würde es in vielen Fällen genügen, wenn er feststellen könnte, ob überhaupt eine Telegrammübertragung auf den Busleitungen stattfindet.

Der Erfindung liegt daher die Aufgabe zugrunde, eine einfache Anzeigeeinrichtung für EIB-Telegramme zu schaffen, die besonders für Inbetriebnahme- und Servicezwecke geeignet ist.

Diese Aufgabe wird durch eine Einrichtung mit den Merkmalen des Anspruchs 1 gelöst.

Die Erfindung bezieht sich auf zwei Ausführungsvarianten. Eine erste Variante der Einrichtung enthält nur eine Leuchtdiode, die jedes übertragene Telegramm durch ein kurzes Aufleuchten anzeigt. Aus der Anzahl der Lichtimpulse pro Zeiteinheit kann die Busbelastung ersehen werden.

Mit der zweiten Variante können durch Verwendung mehrerer Leuchtdioden Telegrammarten, z.B. bezüglich ihrer Adresse oder ihres Schaltbefehls unterschieden werden. Eine vorteilhafte Realisierungsmöglichkeit besteht in der Verwendung des zum EIB-Systems gehörigen Busankopplers BCU (Bus coupler unit).

Beide Lösungsvarianten lassen Ausgestaltungen zu, wie z.B. eine zusätzliche oder alternative akustische Telegrammeldung oder eine Verlängerung der durch Telegramme ausgelösten optischen oder akustischen Anzeigeimpulse.

Eine weitere Erläuterung der Erfindung erfolgt nachstehend anhand von in der Zeichnung dargestellten Ausführungsbeispielen.

Es zeigen:
- Figur 1: ein Blockschema zur Ausführung der ersten Lösungsvariante,
- Figur 2: eine Schaltungsanordnung zur ersten Lösungsvariante,
- Figur 3: ein Blockschema zur zweiten Lösungsvariante,
- Figur 4: eine Schaltungsanordnung zur zweiten Lösungsvariante und
- Figur 5: eine Software-Struktur zur zweiten Lösungsvariante.

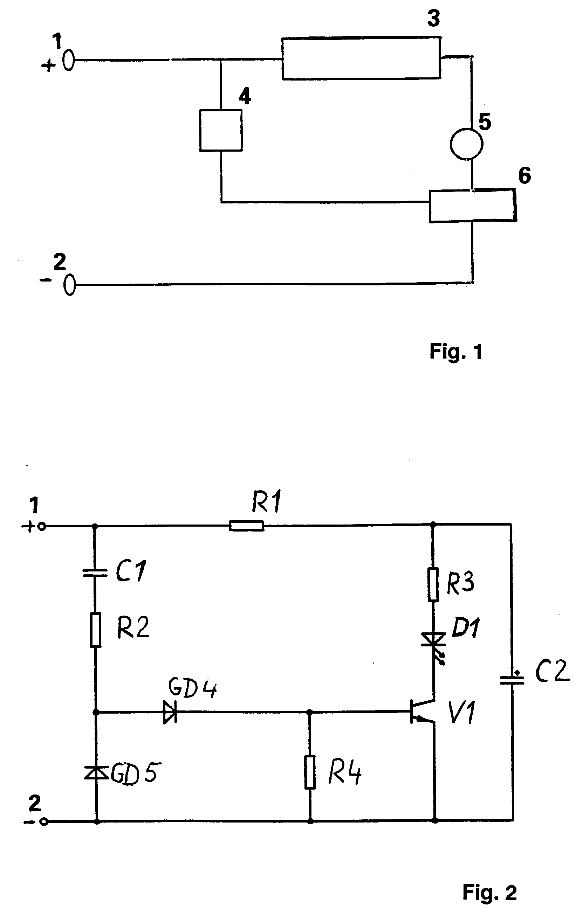

Figur 1 zeigt ein Blockschema zur ersten Lösungsvariante, bei der eine Leuchtdiode 5 aus einer Energiespeichereinrichtung 3 gespeist und durch einen elektronischen Schalter 6 ein- und ausgeschaltet wird. Der elektronische Schalter 6 wird angesteuert durch eine Wechselspannungs-Auskoppeleinrichtung 4.

Mit der ersten Lösungsvariante wird die Gegebenheit genutzt, daß jedes Telegramm Bits mit der logischen Null enthält, die durch eine vorübergehende Änderung des Pegels der Versorgungsspannung auf den Busleitungen 1, 2 dargestellt wird. Die während einer Telegrammübertragung überlagerte Wechselspannung wird mit Hilfe der Wechselspannungs-Auskoppeleinrichtung 4 ausgekoppelt, gleichgerichtet und zur Ansteuerung des elektronischen Schalters 6 genutzt.

Die Anordnung eines Energiespeichers 3, der kontinuierlich aus der Versorgungsgleichspannung nachgeladen wird und die Energieimpulse zur Speisung der Leichtdiode 5 liefert, hat den Vorteil, daß das Bussystem nicht durch Lastimpule belastet wird und somit auch EMV-Probleme vermieden werden.

Bei Bedarf kann ein akustischer Signalgeber, z.B. ein Lautsprecher anstelle der Leuchtdiode 5, zusätzlich zur Leuchtdiode 5 oder umschaltbar angeordnet werden.

Außerdem kann die Wechselspannungs-Auskoppeleinrichtung 4 durch eine Verzögerungsschaltung ergänzt sein, die ein verzögertes Ausschalten des elektronischen Schalters 6 bewirkt.

Zur Realisierung einer Einrichtung gemäß der Lösungsvariante 1 können Standard-Komponenten des EIB-Systems verwendet werden. Eine solche Standard-Komponente ist ein sogenannter Verbinder, der ein Gehäuse, eine Leiterplatte und ein Druckkontaktsystem zur Kontaktierung mit einer Datenschiene (Busleitungen) umfaßt. Datenschienen sind beim EIB-System in eine Hutschiene eingebettet, auf die Geräte, z.B. der Verbinder aufschnappbar sind. Die Leuchtdiode, vorzugsweise eine rote Diode mit geringem Stromverbrauch kann auf der Frontseite des Verbindergehäuses angeordnet werden. Die sonstigen erforderlichen elektronischen Bauelemente können auf der Leiterplatte angeordnet werden.

Figur 2 zeigt Schaltungseinzelheiten der in Figur 1 als Blockschema dargestellten Anordnung. Die Wechselspannungs-Auskoppeleinrichtung 4 ist realisiert durch einen ersten Kondensator C1 und einen zweiten Widerstand R2, sowie durch erste und zweite Gleichrichterdioden GD4 und GD5. Mit R4 ist ein vierter Widerstand bezeichnet, der zwischen Basis und Emitter eines ersten Transistors V1 geschaltet ist. Der Transistor V1 entspricht dem elektronischen Schalter 6 in Figur 1. Seine Schwellenspannung ist so eingestellt, daß der Transistor im Ruhezustand, d.h. wenn kein Telegramm übertragen wird, sperrt und die Leuchtdiode erloschen ist. Ein dritter Widerstand R3 dient der Strombegrenzung durch die Leuchtdiode D1, wenn der Transistor V1 leitend ist. Ein zweiter Kondensator C2 bildet den Energiespeicher 3, der über einen ersten Widerstand R1 andauernd geladen bzw. nachgeladen wird. Die elektrische Schaltung der angesprochenen Bauelemente ist aus Figur 2 ersichtlich und bedarf keiner weiteren Erläuterung.

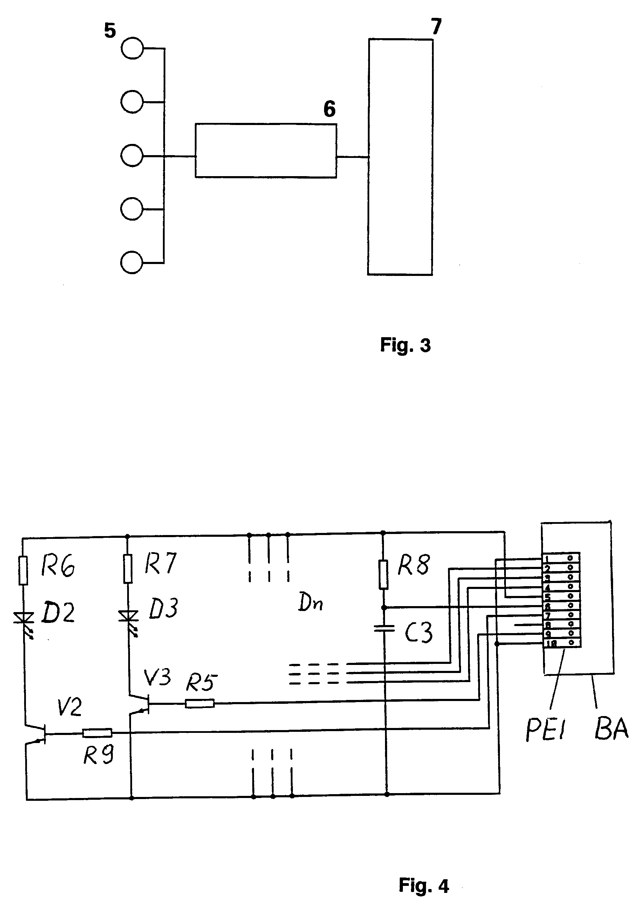

Figur 3 zeigt ein Blockschema zur zweiten Lösungsvariante, bei der mehrere Leuchtdioden 5 angeordnet sind. Die Leuchtdioden 5 werden durch elektronische Schalter 6 ein- und ausgeschaltet, deren Anzahl der Leuchtdiodenzahl entspricht. Die elektronischen Schalter 6 sind von einer Steuereinrichtung 7 angesteuert.

Eine dem in Figur 3 dargestellten Schema entsprechende Schaltungsanordnung ist in Figur 4 gezeigt, wobei nur zwei Leuchtdioden D2, D3 bis Dn mit zugehörigen Schalttransistoren V2, V3 dargestellt sind. Die Widerstände R6 und R7 sind Strombegrenzungswiderstände. Die Widerstände R5 und R9 sind Widerstände zur Basisstrombegrenzung. Die einzelnen Leuchtdioden/Schalttransistor-Zweige sind bezüglich ihrer Stromversorgung parallel geschaltet und an Anschlußklemmen 1 bzw. 5 einer mit PEI (Physical External Interface) bezeichneten Schnittstelleneinrichtung angeschlossen. Die Schnittstelleneinrichtung PEI ist Teil eines Busankopplers BA. Der Busankoppler BA, auch mit BCU bezeichnet, ist ein Standardgerät des EIB-Systems. Der Busankoppler enthält einen Programm- und Datenspeicher, der teilweise durch ein installiertes Betriebssystem belegt ist. Ein Teil der Speicherplätze stehen einem Anwender zur Verfügung. Die im Busankoppler enthaltene Software umfaßt auch Funktionseinheiten wie z.B. Verzögerungsglieder, die vom Anwender genutzt werden können. Der Busankoppler enthält außerdem einen Mikroprozessor. Mit Hilfe des Mikroprozessors und der gespeicherten Software kann der Busankoppler Telegramme bezüglich ihres Inhalts, also z.B. bezüglich Adresse und Schalt- bzw. Steuerbefehl auswerten. Ergebnisse der Telegrammauswertung können über die PEI-Schnittstelle ausgegeben und zur Ansteuerung der Schalttransistoren für Leuchtdioden genutzt werden. Durch Anordnung mehrerer Leuchtdioden, auch Leuchtdioden unterschiedlicher Farbe oder von 2-Farb-Leuchtdioden können ausgewählte Telegramminhalte dargestellt werden. Durch Verwendung der im Busankoppler enthaltene Funktionseinheiten kann durch Programmierung bzw. Parametrierung die Impulsanzahl, Impulsdauer und Leuchtdiodenfarbe mit verschiedenen Ansteuerungsarten gewählt werden.

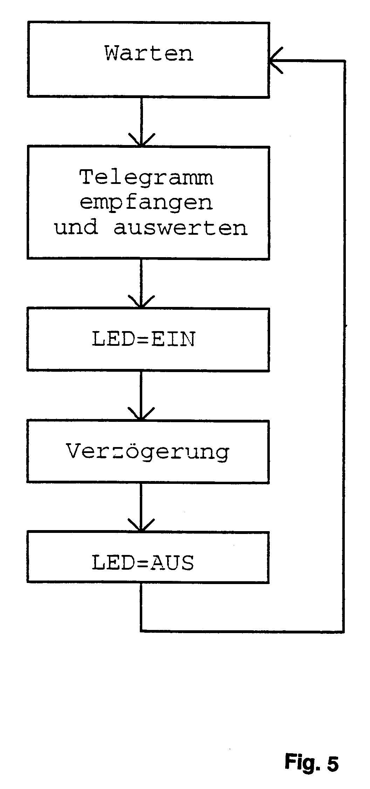

Mit dem in Figur 4 dargestellten Widerstand R8 und dem Kondensator C3 wird ein an die Schnittstelle PEI angeschlossener Hardwaretyp definiert, der durch die Software des Busankopplers BA erkannt wird. Eine mit den Mitteln der Busankopplung BA realisierbare Software-Struktur ist in Figur 5 dargestellt.

Eine Einrichtung gemäß der zweiten Lösungsvariante läßt sich realisieren durch Verwendung des Standardgeräts Busankoppler, das mit einem dazu passenden Gehäuse, z.B. einem Verbinder-Gehäuse verschraubt wird. Die in Figur 3 bzw. 4 dargestellten Leuchtdioden können an der Frontseite des zusätzlichen Gehäuses angeordnet werden. Es werden vorzugsweise LEDs mit geringem Stromverbrauch eingesetzt. Die erforderlichen elektrischen Bauteile können auf einer Leiterplatte angeordnet werden, die in das Gehäuse eingesetzt wird.

### Bezugszeichenliste

- 1, 2: Busleitung
- 3: Energiespeichereinrichtung
- 4: Wechselspannungs-Auskoppeleinrichtung
- 5: Leuchtdiode
- 6: elektronischer Schalter
- 7: Steuereinrichtung
- R1 bis R9: Widerstände
- C1 bis C3: Kondensatoren
- D1 bis Dn: Leuchtdioden
- GD4 und GD5: Gleichrichterdioden
- V1 bis V3: Schalttransistoren
- BA: Busankoppler
- PEI: Schnittstelleneinrichtung

## Patentansprüche

1. Einrichtung zur Anzeige von Telegrammen, die über Leitungen des Europäischen Installationsbusses (EIB) übertragen werden, dadurch gekennzeichnet, daß die Einrichtung wenigstens eine Leuchtdiode (5) zur Anzeige einer Telegrammübertragung enthält, wobei
a) im Fall einer ersten Variante mit Anordnung einer einzigen Leuchtdiode (5) Mittel (4,6) vorhanden sind, die aus dem Spannungssignal auf den Busleitungen (1,2) einen Wechselspannungsanteil auskoppeln und zum Einschalten der Leuchtdiode (5) verwenden, und
b) im Fall einer zweiten Variante mit Anordnung mehrerer Leuchtdioden (5) Mittel (6,7) vorhanden sind, die in Abhängigkeit vom Telegramminhalt unterschiedliche Leuchtdioden (5) ansteuern.

2. Einrichtung nach Anspruch 1, dadurch gekennzeichnet, daß im Fall der ersten Variante eine elektronische Schaltung mit Schaltungsteilen für folgende Funktionen vorhanden ist:
a) ein elektronischer Schalter (6) mit dem die Leuchtdiode (5) schaltbar ist,
b) eine Wechselspannungs-Auskoppeleinrichtung (4), die eine während der Telegrammübertragung der Busversorgungsgleichspannung überlagerte Wechselspannung auskoppelt, gleichrichtet und als Steuersignal für den elektronischen Schalter (6) liefert, und
c) einen Energiespeicher (3), der aus der Versorgungsgleichspannung geladen wird und während der Leuchtdioden-Einschaltzeiten Energie zur Speisung der Leuchtdiode (5) abgibt.

3. Einrichtung nach Anspruch 1, dadurch gekennzeichnet, daß im Fall der zweiten Lösungsvariante mit Anordnung mehrerer Leuchtdioden (5 bzw. D2 bis Dn) ein Standard-EIB-Gerät, nämlich der Busankoppler (BA) eingesetzt ist zur Auswertung des Telegramminhalts und zur Ansteuerung ausgewählter Leuchtdioden (D2 bis Dn), wobei jede Leuchtdiode (D2 bis Dn) über einen elektronischen Schalter (z.B. V2, R9, R6 zum Schalten von D2) schaltbar ist.
